# EUROPEAN PATENT APPLICATION

(11) **EP 4 748 605 A1**
(43) Date of publication of application: **27.05.2026**
(21) Application number: 25210415.3
(22) Date of filing: 22.10.2025
(51) Int. Cl.: B60K 1/04

(54) **PROTECTIVE STRUCTURE OF BATTERY PACK**

(30) Priority: 20.11.2024 JP 2024202317
(71) Applicant: Suzuki Motor Corporation, Shizuoka 432-8611 (JP)
(72) Inventor: KIUCHI, Seita, Hamamatsu-shi, 432-8611 (JP); HOSOKAWA, Kazuki, Hamamatsu-shi, 432-8611 (JP); KAWAI, Ikumi, Hamamatsu-shi, 432-8611 (JP)
(74) Representative: Plasseraud IP

(57) **Abstract**

[Problem to be Solved]

To provide a protective structure of a battery pack (10), the protective structure being capable of protecting a coupling part between a battery pack (10) and an exhaust gas duct (20), and the interior of the battery pack (10) from an impact occurring in a front collision or a side collision of a vehicle (1).

[Solution]

A battery coupling part (21) is composed of an L-shaped resin member including a first extension part (21A) and a second extension part (21B), the first extension part (21A) extending forward and being coupled to a battery pack (10), the second extension part (21B) extending from the rear end of the first extension part (21A) toward one side in the vehicle width direction. The second extension part (21B) is disposed at a position on the other side of one end portion of a bracket (30) in the vehicle width direction.

## Description

### [Technical Field]

The present invention relates to a protective structure of a battery pack.

### [Background Art]

Patent Literature 1 describes a technique in which an exhaust gas passage is provided in an energy storage device, this exhaust gas passage is coupled to an exhaust gas duct, and a ventilation passage that is in communication with an outside of the cabin is formed in the exhaust gas duct. In Patent Literature 1, the energy storage device is provided on the upper surface of a floor panel. The energy storage device includes a battery case, a plurality of unit cells, and a duct, and the plurality of unit cells and the duct are disposed in the battery case. The exhaust gas duct is coupled to the right end portion of the duct that is located outside the battery case.

### [Citation List]

### [Patent Literature]

[Patent Literature 1] JP7070448B

### [Summary of Invention]

### [Technical Problem]

However, in the conventional technique described in Patent Literature 1, there is a risk of a battery pack being damaged by an impact occurring in a collision of the vehicle. That is, in the technique described in Patent Literature 1, a coupling part between the exhaust gas duct and the battery case is disposed at the right end portion of the duct (vehicle side end portion) and hence, there is a risk that the coupling part and the interior of the battery case may be damaged in a front collision or a side collision of the vehicle.

The present invention has been made by focusing on the above-mentioned problem, and it is an object of the present invention to provide a protective structure of a battery pack, the protective structure being capable of protecting the coupling part between the battery pack and the exhaust gas duct, and the interior of the battery pack from an impact occurring in a front collision or a side collision of the vehicle.

### [Solution to Problem]

The present invention is directed to a protective structure of a battery pack for a vehicle, the vehicle including: a floor panel forming a floor surface of a cabin; a battery pack disposed on an upper surface of the floor panel on one side in a vehicle width direction below a front seat; a bracket configured to cover the battery pack, and fixed to the floor panel; a discharge port formed in the floor panel on one side of the bracket in the vehicle width direction, the discharge port being in communication with an outside of the cabin below the floor panel; and an exhaust gas duct including a battery coupling part, a discharge port coupling part, and a hose part, and configured to discharge gas generated in the battery pack to the outside of the cabin, the battery coupling part being coupled to a rear surface of the battery pack, the discharge port coupling part being coupled to the discharge port, the hose part coupling the battery coupling part and the discharge port coupling part to each other, the protective structure being characterized in that the battery coupling part is an L-shaped resin member including a first extension part and a second extension part, the first extension part extending forward and being coupled to the battery pack, the second extension part extending from a rear end of the first extension part toward one side in the vehicle width direction, and the second extension part is disposed at a position on the other side of one end portion of the bracket in the vehicle width direction.

### [Advantageous Effect of Invention]

As described above, according to the present invention, it is possible to provide a protective structure of a battery pack, the protective structure being capable of protecting a coupling part between the battery pack and the exhaust gas duct, and the interior of the battery pack from an impact occurring in a front collision or a side collision of the vehicle.

### [Brief Description of Drawings]

[Figure 1] Figure 1 is a plan view of a vehicle equipped with a protective structure of a battery pack according to one embodiment of the present invention.
[Figure 2] Figure 2 is a perspective view of a battery pack and a cover, the battery pack being equipped with the protective structure of the battery pack according to one embodiment of the present invention.
[Figure 3] Figure 3 is a perspective view of the battery pack equipped with the protective structure of the battery pack according to one embodiment of the present invention.
[Figure 4] Figure 4 is a plan view of the battery pack and the cover, the battery pack being equipped with the protective structure of the battery pack according to one embodiment of the present invention.
[Figure 5] Figure 5 is a back view of the battery pack and the cover, the battery pack being equipped with the protective structure of the battery pack according to one embodiment of the present invention.
[Figure 6] Figure 6 is a plan view of the battery pack and an exhaust gas duct, the battery pack being equipped with the protective structure of the battery pack according to one embodiment of the present invention.
[Figure 7] Figure 7 is a perspective view of the battery pack and the exhaust gas duct, the battery pack being equipped with the protective structure of the battery pack according to one embodiment of the present invention.

### [Description of Embodiment]

A protective structure of a battery pack according to one embodiment of the present invention is a protective structure of a battery pack for a vehicle, the vehicle including: a floor panel forming a floor surface of a cabin; a battery pack disposed on an upper surface of the floor panel on one side in a vehicle width direction below a front seat; a bracket configured to cover the battery pack, and fixed to the floor panel; a discharge port formed in the floor panel on one side of the bracket in the vehicle width direction, the discharge port being in communication with an outside of the cabin below the floor panel; and an exhaust gas duct including a battery coupling part, a discharge port coupling part, and a hose part, and configured to discharge gas generated in the battery pack to the outside of the cabin, the battery coupling part being coupled to a rear surface of the battery pack, the discharge port coupling part being coupled to the discharge port, the hose part coupling the battery coupling part and the discharge port coupling part to each other, the protective structure being characterized in that the battery coupling part is an L-shaped resin member including a first extension part and a second extension part, the first extension part extending forward and being coupled to the battery pack, the second extension part extending from a rear end of the first extension part toward one side in the vehicle width direction, and the second extension part is disposed at a position on the other side of one end portion of the bracket in the vehicle width direction. With such a configuration, the protective structure of the battery pack according to one embodiment of the present invention can protect the coupling part between the battery pack and the exhaust gas duct, and the interior of the battery pack from an impact occurring in a front collision or a side collision of the vehicle.

### [Embodiment]

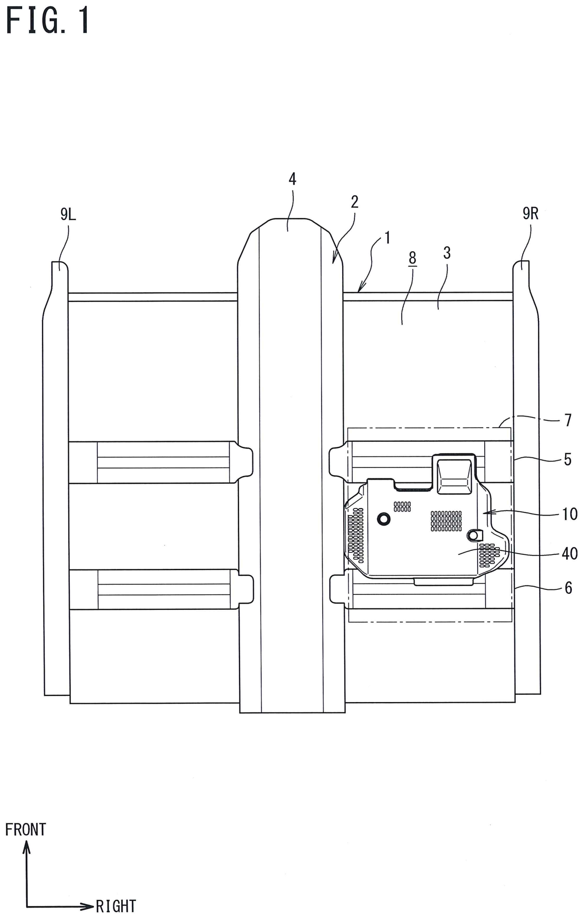

Hereinafter, a protective structure of a battery pack according to one embodiment of the present invention will be described with reference to drawings. Figure 1 to Figure 7 are diagrams showing the protective structure of the battery pack according to one embodiment of the present invention. In Figure 1 to Figure 7, the directions indicated by "up", "down", "right", and "left" refer to directions as viewed from the driver's seat.

First, the configuration will be described. In Figure 1, a vehicle 1 includes a vehicle body 2. The vehicle body 2 includes a floor panel 3, and the floor panel 3 forms the floor surface of a cabin 8.

A floor tunnel 4 extending in the front-rear direction is provided at the center portion of the floor panel 3 in the vehicle width direction. The floor tunnel 4 protrudes upward in a trapezoidal shape. Left and right side sills 9L, 9R extending in the front-rear direction are provided at both end portions of the floor panel 3 in the vehicle width direction.

Seat cross members 5, 6 extending in the vehicle width direction are provided to the floor panel 3.

The seat cross members 5, 6 support front seats 7 via seat rails not shown in the drawing.

The seat cross members 5, 6 are connected to the floor tunnel 4 and the left and right side sills 9L, 9R, and protrude upward in a trapezoidal shape. The seat cross members 6 are disposed behind the seat cross members 5.

The right front seat 7 is disposed on the upper surface of the floor panel 3 on one side (right side) in the vehicle width direction. The area on the one side (right side) in the vehicle width direction on the upper surface of the floor panel 3 refers to a portion that is located on the floor panel 3, and is surrounded by the floor tunnel 4 and the right side sill 9R. A battery pack 10 is disposed on the upper surface of the floor panel 3 below the front seat 7.

The battery pack 10 is disposed between the front and rear seat cross members 5, 6. The battery pack 10 is an assembled battery formed by combining a plurality of battery modules, each of which is formed of a plurality of cells not shown in the drawing. The battery pack 10 supplies electric power of 48 V, for example, to electric components, a motor, and other components not shown in the drawing of the vehicle 1.

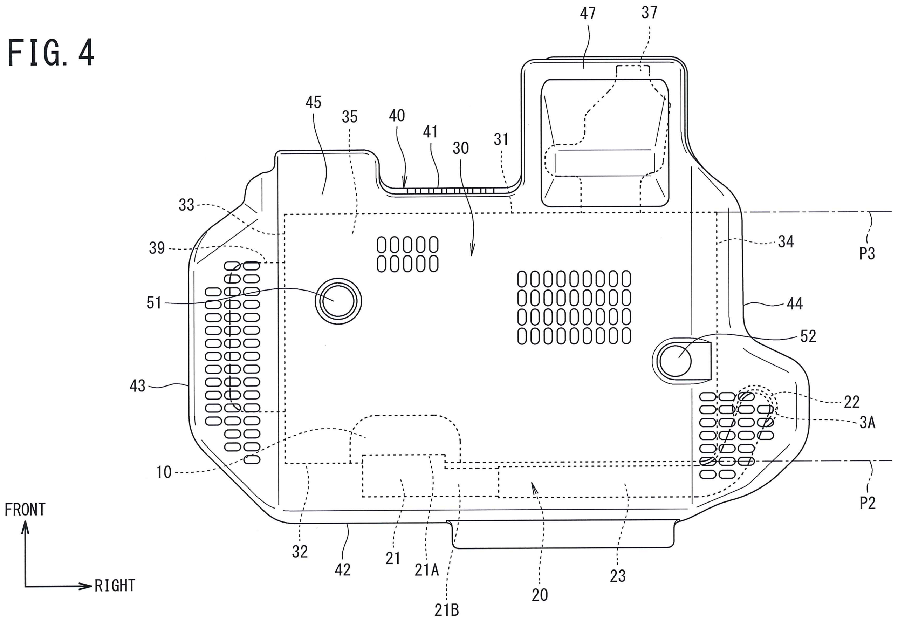

The floor panel 3 has a discharge port 3A (see Figure 4). The discharge port 3A is in communication with an outside of the cabin below the floor panel 3. The discharge port 3A is formed in the floor panel 3 in the vicinity of one side surface (right side surface) of a bracket 30 in the vehicle width direction.

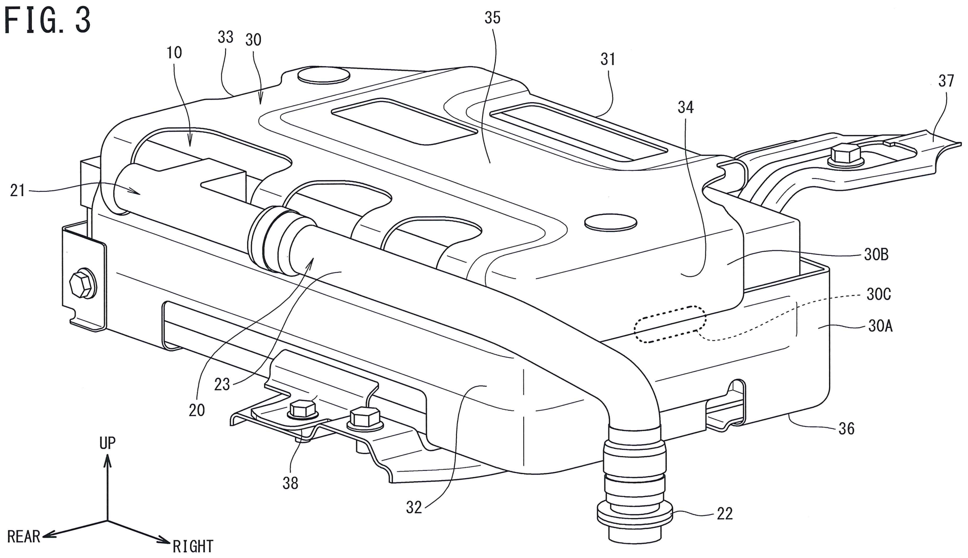

In Figure 3, the battery pack 10 is covered by the bracket 30. The bracket 30 is fixed to the floor panel 3.

In Figure 1, Figure 2, Figure 4, and Figure 5, the battery pack 10 covered by the bracket 30 is further covered by a cover 40 made of resin.

In Figure 3, Figure 4, and Figure 5, the bracket 30 includes a front surface 31, a rear surface 32, a left side surface 33, a right side surface 34, an upper surface 35, and a bottom surface 36, the front surface 31 covering the front surface of the battery pack 10, the rear surface 32 covering the rear surface of the battery pack 10, the left side surface 33 covering the left side surface of the battery pack 10, the right side surface 34 covering the right side surface of the battery pack 10, the upper surface 35 covering the upper surface of the battery pack 10, the bottom surface 36 covering the bottom surface of the battery pack 10.

The bracket 30 also includes a front leg part 37, a rear leg part 38, and a left leg part 39, the front leg part 37 being fixed to the upper surface of the seat cross member 5, the rear leg part 38 being fixed to the upper surface of the floor panel 3 in the vicinity of the rear side of the battery pack 10, the left leg part 39 being fixed to the upper surface of the floor panel 3 in the vicinity of the left side of the battery pack 10.

The bracket 30 also includes a lower bracket 30A and an upper bracket 30B, the lower bracket 30A covering the bottom surface and the lower portions of the side surfaces of the battery pack 10, the upper bracket 30B covering the upper surface and the upper portions of the side surfaces of the battery pack 10, and overlapping with the lower bracket on the side surfaces of the battery pack 10.

In Figure 3, an exhaust gas duct 20 is coupled to the battery pack 10, and the exhaust gas duct 20 discharges gas generated in the battery pack 10 to the outside of the cabin. The exhaust gas duct 20 includes a battery coupling part 21, a discharge port coupling part 22, and a hose part 23, the battery coupling part 21 being coupled to the rear surface of the battery pack 10, the discharge port coupling part 22 being coupled to the discharge port 3A, the hose part 23 coupling the battery coupling part 21 and the discharge port coupling part 22 to each other. The battery coupling part 21 and the discharge port coupling part 22 are made of hard resin, and the hose part 23 is made of rubber.

The hose part 23 extends from the battery coupling part 21 toward one side in the vehicle width direction along the rear surface 32 of the bracket 30, is bent at the position of one end portion of the bracket 30 in the vehicle width direction to extend toward the front side of the vehicle, and is then coupled to the discharge port coupling part 22.

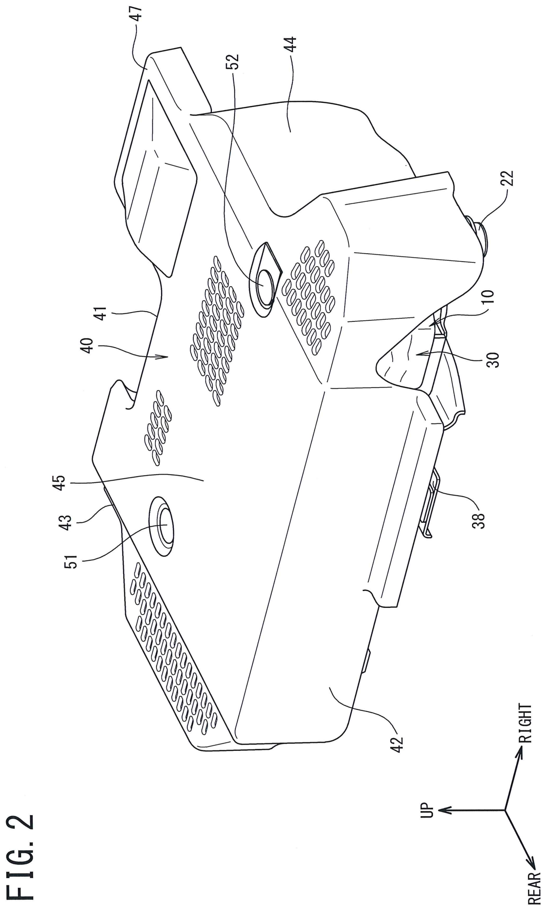

In Figure 2, Figure 4, and Figure 5, the bracket 30 and the exhaust gas duct 20 are covered by the cover 40 from above and from the side.

A front surface 41 of the cover 40 covers the bracket 30 from the front, and faces the front surface 31 of the bracket 30 in the front-rear direction of the vehicle.

A rear surface 42 of the cover 40 covers the bracket 30 from the rear, and faces the rear surface 32 of the bracket 30 and the exhaust gas duct 20 in the front-rear direction of the vehicle.

A left side surface 43 of the cover 40 covers the bracket 30 from the left, and faces the left side surface 33 of the bracket 30 in the vehicle width direction.

A right side surface 44 of the cover 40 covers the bracket 30 from the right, and faces the right side surface 34 of the bracket 30 in the vehicle width direction.

An upper surface 45 of the cover 40 covers the bracket 30 from above, and faces the upper surface 35 of the bracket 30 and the exhaust gas duct 20 in the up-down direction of the vehicle.

As shown in Figure 2 and Figure 4, a portion of the upper surface 45 of the cover 40 that is located in the vicinity of the left end portion of the upper surface 45 is fixed by a clip 51 to a portion of the upper surface 35 of the bracket 30 that is located in the vicinity of the left end portion of the upper surface 35. Further, a portion of the upper surface 45 of the cover 40 that is located in the vicinity of the right end portion of the upper surface 45 is fixed by a clip 52 to a portion of the upper surface 35 of the bracket 30 that is located in the vicinity of the right end portion of the upper surface 35. Furthermore, a portion of the front surface 41 of the cover 40 that is located in the vicinity of the right end portion of the front surface 41 forms a projecting part 47 that projects forward, and this projecting part 47 covers the front leg part 37 of the bracket 30 from above. A triangular protrusion that is engaged with the front end portion of the front leg part 37 and not shown in the drawing is formed on the inner surface of the front end portion of the projecting part 47, and the projecting part 47 of the cover 40 is locked by the front leg part 37. As described above, the cover 40 is fixed to the bracket 30 at three positions.

As shown in Figure 3 and Figure 4, in the present embodiment, the battery coupling part 21 is an L-shaped resin member including a first extension part 21A and a second extension part 21B, the first extension part 21A extending forward and being coupled to the battery pack 10, the second extension part 21B extending from the rear end of the first extension part 21A toward one side in the vehicle width direction.

The second extension part 21B is disposed at a position on the other side of one end portion of the bracket 30 in the vehicle width direction.

In other words, the second extension part 21B is disposed at the position to the left of a position P1 of the right side surface 34, which forms the one end portion of the bracket 30 in the vehicle width direction.

The discharge port 3A is formed in the floor panel 3 on one side (right side) of the bracket 30 in the vehicle width direction, and between the front end and the rear end of the bracket 30.

To be more specific, the discharge port 3A is formed at the position to the right of the position P1 of the right side surface 34 of the bracket 30 in the vehicle width direction, and between a front end position P3 and a rear end position P2 in the front-rear direction of the vehicle, the front surface 31 of the bracket 30 being disposed at the front end position P3, the rear surface 32 being disposed at the rear end position P2.

The exhaust gas duct 20 horizontally extends from the second extension part 21B toward one side in the vehicle width direction, is bent toward the front side of the vehicle at the one end portion of the bracket 30 in the vehicle width direction, and is coupled to the discharge port 3A.

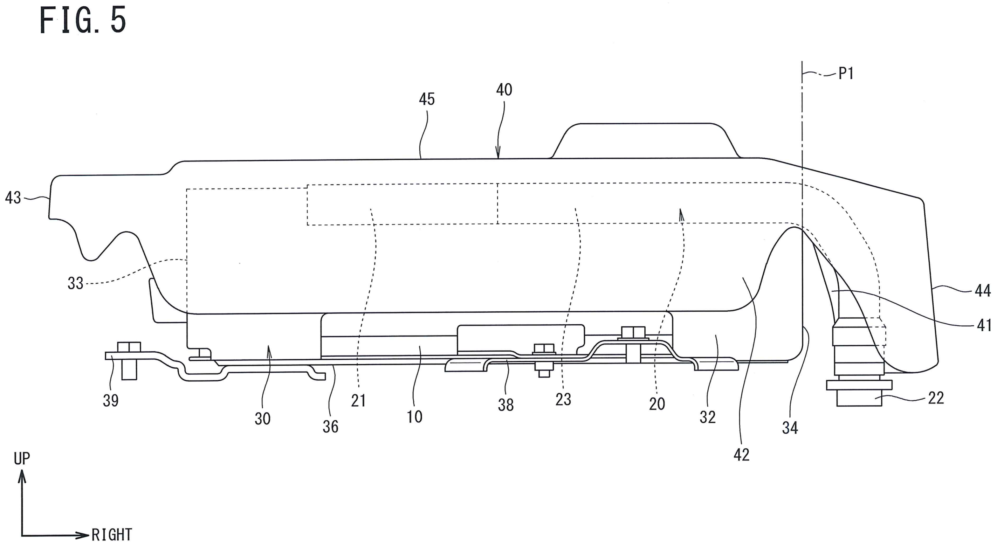

In Figure 3 and Figure 5, the discharge port coupling part 22 is disposed below the bottom surface 36 of the bracket 30 in the up-down direction of the vehicle.

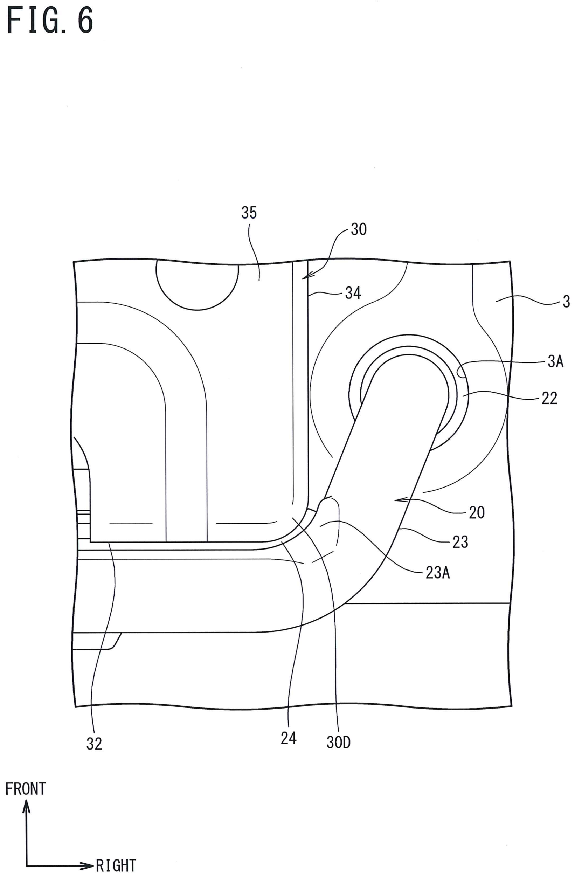

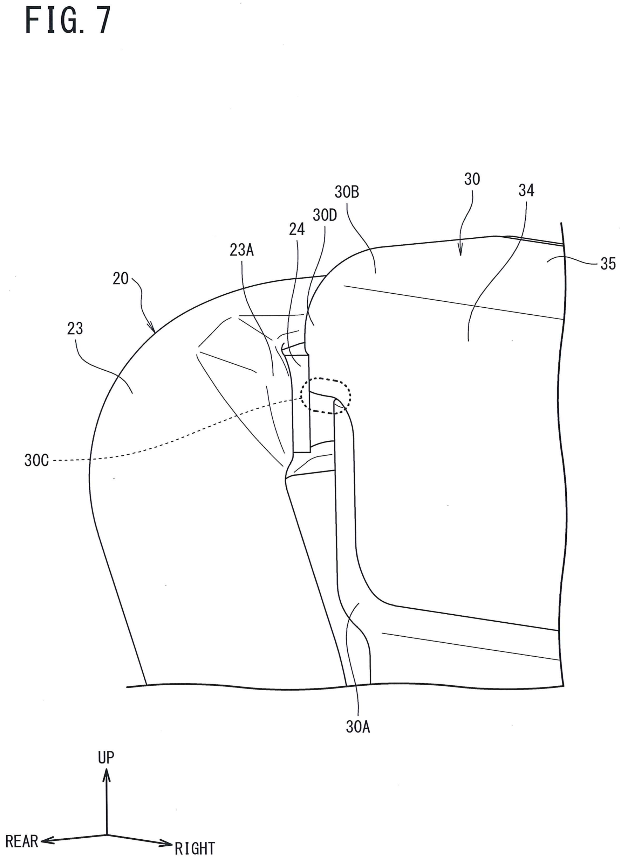

In Figure 6 and Figure 7, the hose part 23 includes a bulged part 23A that bulges toward a corner part 30D formed by the rear surface 32 of the bracket 30 and one side surface (the right side surface 34) of the bracket 30 in the vehicle width direction. A belt-shaped sealing member 24 made of an elastic body is interposed between the bulged part 23A and the corner part 30D. Sponge-like foamed resin, rubber, or elastomer, for example, can be used for the sealing member 24.

In Figure 3 and Figure 7, a stepped part 30C is formed at the corner part 30D of the bracket 30 by the overlap of the lower bracket 30A and the upper bracket 30B. The sealing member 24 is disposed at the corner part 30D to extend over the stepped part 30C.

As described above, the sealing member 24 made of an elastic body is interposed between the bulged part 23A and the corner part 30D, so that the position of the sealing member 24 is fixed. In addition, the sealing member 24 disposed to extend over the stepped part 30C is engaged with the stepped part 30C, so that the position of the sealing member 24 is fixed. To stabilize the position of the sealing member 24, and to reliably prevent the sealing member 24 from falling off, the sealing member 24 is fixed to the bulged part 23A by bonding.

As described above, in the present embodiment, the battery coupling part 21 is an L-shaped resin member including the first extension part 21A and the second extension part 21B, the first extension part 21A extending forward and being coupled to the battery pack 10, the second extension part 21B extending from the rear end of the first extension part 21A toward one side in the vehicle width direction. The second extension part 21B is disposed at the position on the other side of the one end portion of the bracket 30 in the vehicle width direction.

With such a configuration, the first extension part 21A and the second extension part 21B are bent into an L shape, thereby making the battery coupling part 21 compact and hence, it is possible to dispose the battery pack 10 in a narrow space located below the front seat 7.

In addition, the second extension part 21B is disposed at the position on the other side of the one end portion of the bracket 30 in the vehicle width direction and hence, the entire battery coupling part 21 can be fit in a space behind the bracket 30. Accordingly, it is possible to prevent the battery coupling part 21 made of resin from being damaged in a front collision or a right side collision and hence, it is possible to prevent damage to the interior of the battery pack 10 that is coupled to the battery coupling part 21. As a result, it is possible to protect the battery pack 10 from an impact occurring in a front collision or a side collision of the vehicle 1.

In the present embodiment, the discharge port 3A is formed in the floor panel 3 at the position on the one side of the bracket 30 in the vehicle width direction, and between the front end and the rear end of the bracket 30, the exhaust gas duct 20 horizontally extends from the second extension part 21B toward one side in the vehicle width direction, is bent toward the front side of the vehicle at the one end portion of the bracket 30 in the vehicle width direction, and is coupled to the discharge port 3A, and the hose part 23 is made of rubber.

With such a configuration, since the hose part 23 is made of rubber, it is possible to cause the hose part 23 to serve as a cushioning member in a side collision, the hose part 23 being disposed in the vicinity of the cabin outer side surface of the battery pack 10. Accordingly, it is possible to reduce an impact applied to the battery pack 10. In addition, the discharge port 3A is provided at a position that overlaps with the battery pack 10 when the battery pack 10 is viewed in a side view from the outside of the cabin and hence, the area of the hose part 23 disposed in the vicinity of the cabin outer side surface of the battery pack 10 is increased. Accordingly, the hose part 23 can more effectively serve as the cushioning member.

In the present embodiment, the discharge port coupling part 22 is made of resin, and is disposed at the position lower than the bottom surface 36 of the bracket 30 in the up-down direction of the vehicle.

With such a configuration, the discharge port coupling part 22 having high hardness and made of resin is disposed at the position lower than the bottom surface 36 of the bracket 30 and hence, it is possible to prevent direct contact of the discharge port coupling part 22 with the battery pack 10 in a side collision of the vehicle 1, thus preventing the battery pack 10 from being damaged.

In the present embodiment, the hose part 23 includes the bulged part 23A that bulges toward the corner part 30D formed by the rear surface 32 of the bracket 30 and the one side surface of the bracket 30 in the vehicle width direction, and the sealing member 24 made of an elastic body is interposed between the bulged part 23A and the corner part 30D.

With such a configuration, the position of the hose part 23 can be fixed relative to the bracket 30, thereby enabling the hose part 23 to reliably serve as a cushioning member. In addition, noise caused by vibration of the hose part 23 can be suppressed, and it is also possible to prevent the hose part 23 from being damaged due to friction with the bracket 30. Further, providing the bulged part 23A on the hose part 23 allows the sealing member 24 to be easily disposed, thereby increasing a contact area between the sealing member 24 and the bracket 30.

In the present embodiment, the bracket 30 includes the lower bracket 30A and the upper bracket 30B, the lower bracket 30A covering the bottom surface and the lower portions of the side surfaces of the battery pack 10, the upper bracket 30B covering the upper surface and the upper portions of the side surfaces of the battery pack 10 and overlapping with the lower bracket on the side surfaces of the battery pack 10. The stepped part 30C is formed at the corner part 30D by the overlap of the lower bracket 30A and the upper bracket 30B, and the sealing member 24 is disposed at the corner part 30D to extend over the stepped part 30C.

With such a configuration, the sealing member 24 is engaged with the stepped part 30C at the corner part 30D of the bracket, so that the position of the sealing member 24 is fixed. Accordingly, the positions of the sealing member 24 and the hose part 23 can be stabilized.

In the present embodiment, the sealing member 24 is fixed to the bulged part 23A by bonding.

With such a configuration, since the sealing member 24 is fixed to the bulged part 23A by bonding, the position of the sealing member 24 is fixed. Accordingly, the positions of the sealing member 24 and the hose part 23 can be stabilized and hence, it is possible to reliably prevent the sealing member 24 from falling off.

Although the embodiment of the present invention has been disclosed, it is apparent that modifications may be applied by those who are skilled in the art without departing from the scope of the present invention. All of such modifications and equivalents are intended to be encompassed by the following claims.

### [Reference Signs List]

1 vehicle, 3 floor panel, 3A discharge port, 7 front seat, 8 cabin, 10 battery pack, 20 exhaust gas duct, 21 battery coupling part, 21A first extension part, 21B second extension part, 22 discharge port coupling part, 23 hose part, 23A bulged part, 24 sealing member, 30 bracket, 30A lower bracket, 30B upper bracket, 30C stepped part, 30D corner part, 32 rear surface, 34 right side surface (one side surface in vehicle width direction), 36 bottom surface, P1 position (position of one end portion in vehicle width direction) P2 rear end position, P3 front end position

## Claims

1. A protective structure of a battery pack (10) for a vehicle (1), the vehicle (1) including:
a floor panel (3) forming a floor surface of a cabin (8);
a battery pack (10) disposed on an upper surface of the floor panel (3) on one side in a vehicle width direction below a front seat (7);
a bracket (30) configured to cover the battery pack (10), and fixed to the floor panel (3);
a discharge port (3A) formed in the floor panel (3) on one side of the bracket (30) in the vehicle width direction, the discharge port (3A) being in communication with an outside of the cabin (8) below the floor panel (3); and
an exhaust gas duct (20) including a battery coupling part (21), a discharge port coupling part (22), and a hose part (23), and configured to discharge gas generated in the battery pack (10) to the outside of the cabin (8), the battery coupling part (21) being coupled to a rear surface of the battery pack (10), the discharge port coupling part (22) being coupled to the discharge port (3A), the hose part (23) coupling the battery coupling part (21) and the discharge port coupling part (22) to each other, the protective structure being **characterized in that**
the battery coupling part (21) is an L-shaped resin member including a first extension part (21A) and a second extension part (21B), the first extension part (21A) extending forward and being coupled to the battery pack (10), the second extension part (21B) extending from a rear end of the first extension part (21A) toward one side in the vehicle width direction, and
the second extension part (21B) is disposed at a position on the other side of one end portion of the bracket (30) in the vehicle width direction.

2. The protective structure of a battery pack (10) as claimed in claim 1, wherein
the discharge port (3A) is formed in the floor panel (3) at a position on the one side of the bracket (30) in the vehicle width direction, and between a front end and a rear end of the bracket (30),
the exhaust gas duct (20) horizontally extends from the second extension part (21B) toward the one side in the vehicle width direction, is bent toward a front side of the vehicle (1) at the one end portion of the bracket (30) in the vehicle width direction, and is coupled to the discharge port (3A), and
the hose part (23) is made of rubber.

3. The protective structure of a battery pack (10) as claimed in claim 1 or claim 2, wherein the discharge port coupling part (22) is made of resin, and is disposed at a position lower than a bottom surface (36) of the bracket (30) in an up-down direction of the vehicle (1).

4. The protective structure of a battery pack (10) as claimed in claim 3, wherein
the hose part (23) includes a bulged part (23A) that bulges toward a corner part (30D) formed by a rear surface (32) of the bracket (30) and one side surface of the bracket (30) in the vehicle width direction, and
a sealing member (24) made of an elastic body is interposed between the bulged part (23A) and the corner part (30D).

5. The protective structure of a battery pack (10) as claimed in claim 4, wherein
the bracket (30) includes a lower bracket (30A) and an upper bracket (30B), the lower bracket (30A) covering a bottom surface and a lower portion of a side surface of the battery pack (10), the upper bracket (30B) covering an upper surface and an upper portion of the side surface of the battery pack (10) and overlapping with the lower bracket (30A) on the side surface of the battery pack (10),
a stepped part (30C) is formed at the corner part (30D) by an overlap of the lower bracket (30A) and the upper bracket (30B), and
the sealing member (24) is disposed at the corner part (30D) to extend over the stepped part (30C).

6. The protective structure of a battery pack (10) as claimed in claim 4, wherein the sealing member (24) is fixed to the bulged part (23A) by bonding.
